Europäisches Patentamt

(19) European Patent Office

Office européen des brevets

(11) Numéro de publication: **0 172 977**
**B1**

## FASCICULE DE BREVET EUROPÉEN

(45) Date de publication du fascicule du brevet:
**25.01.89**

(21) Numéro de dépôt: **84810508.6**

(22) Date de dépôt: **17.10.84**

(51) Int. Cl.⁴: **H 02 K 3/26,** H 02 K 3/04,
H 02 K 23/54, H 02 K 29/00

(54) **Moteur électrique.**

(30) Priorité: **31.08.84 CH 4183/84**

(43) Date de publication de la demande:
**05.03.86 Bulletin 86/10**

(45) Mention de la délivrance du brevet:
**25.01.89 Bulletin 89/4**

(84) Etats contractants désignés:
**AT CH DE FR GB IT LI NL SE**

(56) Documents cité:
**FR-A-1 371 795**
**GB-A-661**
**GB-A-302 497**
**GB-A-962 322**
**GB-A-2 000 646**

(73) Titulaire: **Asgalium S.A., Avenue Léopold- Robert
73a, CH- 2300 La Chaux- de- Fonds (CH)**

(72) Inventeur: **Heyraud, Marc, Dr., Recorne 24b, CH-
2300 La Chaux- de- Fonds (CH)**

(74) Mandataire: **Rochat, Daniel Jean, Bovard SA
Ingénieurs- conseils ACP Optingenstrasse 16, CH-
3000 Bern 25 (CH)**

## Description

La présente invention a pour objet un moteur électrique comprenant une partie fixe, une partie mobile en rotation autour d'un axe, et un dispositif d'alimentation qui est normalement relié à une source de puissance à tension constante, moteur dans lequel une desdites parties comporte un bobinage avec un ensemble de nappes actives formées de conducteurs actifs, réparties autour de l'axe avec un pas donné, et un ensemble de nappes de connexion associées chacune à deux nappes actives adjacentes et dont les conducteurs relient en série les conducteurs actifs appartenant à ces deux nappes adjacentes, et dans lequel, en outre, le dispositif d'alimentation commande avec une fréquence qui correspond au pas des nappes actives des commutations des connexions entre les nappes et les pôles de la source de puissance.

Dans les moteurs de ce genre, le dispositif d'alimentation peut être soit un collecteur si le bobinage est incorporé à la partie mobile, soit un dispositif électronique si au contraire le bobinage est incorporé à la partie fixe. Dans les deux cas, la réalisation du dispositif d'alimentation et de l'ensemble du bobinage ainsi que du ou des flux magnétiques doit tenir compte du fait que le couple moteur varie périodiquement, la différence entre sa valeur maximum et sa valeur minimum étant proportionnelle à $1-\cos \frac{\pi}{2n}$, 2n étant le nombre de commutations par paires de pôles. Pour diminuer la valeur de cette différence, on est conduit à augmenter n, mais ceci crée des complications constructives.

Une autre solution à ce problème a été décrite dans un article de J. Lindner paru dans la revue "Feintwerktechnik und Messtechnik" 88 (1980) 4. Cette solution consiste à supprimer les parties latérales des bobines.

Le fascicule de brevet britannique GB-A-302 497 propose déjà une disposition ondulée de nappes de connexion dans un bobinage d'un moteur du genre spécifé au début. Cependant, tous les conducteurs des nappes ondulées présentent la même disposition et de plus, le bobinage, qui fait partie du rotor, comporte non seulement des connexions à la source de puissance, qui passer par des balais et les segments d'un collecteur, mais encore des connexions intermédiaires, qui passent par un second collecteur et relient les bobines à des enroulements auxiliaires du stator, de manière à provoquer des impulsions de couple. Cette disposition n'a pas pour effet d'atténuer les variations périodiques du couple moteur.

Selon le brevet français FR-A-1 371 795, il est aussi connu de réaliser un bobinage plat réparti circulairement autour d'un axe selon une disposition imbriquée, en prévoyant des nappes de conducteurs de connexion dont certains relient un conducteur actif radial à un autre conducteur placé dans la même zone annulaire, et d'autres conducteurs de connexion relient deux conducteurs actifs radiaux placés dans des zones annulaires de rayons moyens différents. Le but est d'utiliser au maximum l'espace circulaire plan occupé par le bobinage, mais cette disposition connue ne résout pas le problème à la base de la présente invention.

Cette dernière à pour but de proposer un agencement des moteurs du genre mentionné plus haut qui réduit considérablement l'ondulation du couple sans augmenter le nombre de segments du collecteur et sans limiter le remplissage des bobines. Cet agencement est basé sur le fait qu'on peut "aplatir" une courbe sinusoïdale ou formée de portions de sinusoïdes en ajoutant à l'expression mathématique de la courbe, des termes représentant des ondulations ayant une période plus courte que celle de la sinusoïde de base, ces périodes étant des sousmultiples de nombre impair de la période de base.

Pour atteindre le but mentionné, le moteur selon l'invention est donc caractérisé en ce que dans une partie des nappes de connexion une partie des conducteurs sont disposés de façon à comporter des segments auxiliaires ayant une orientation semblable à celle des nappes actives qu'elles relient, et en ce que ces segments de conducteurs forment des nappes auxiliaires réparties avec un pas déterminé qui est un sousmultiple impair du pas des nappes actives.

Cet agencement a pour effet que lors de la rotation du moteur il se produit dans les nappes auxiliaires une tension induite dont la fréquence est un multiple de la tension induite dans la partie normale de l'enroulement, ce multiple étant un nombre impair égal àu sousmultiple susmentionné.

Dans une exécution préférée dans laquelle le bobinage est incorporé à la partie du moteur qui est mobile en rotation et est formé de bobines plates réparties en forme de disque, une partie de chaque bobine située vers les têtes de bobines formera une grecque qui, dans le cas où le nombre de paires de nappes auxiliaires est 3 occupera un secteur de 120° électrique.

On va décrire ci-après et à titre d'exemple une forme d'exécution de l'objet de l'invention en se référant au dessin annexé, dont:

la fig. 1 est une vue en plan du bobinage du moteur selon cette forme d'exécution,
la fig. 2 est une vue d'un détail d'une bobine, et
la fig. 3 est une vue de l'ensemble d'aimants constituant le rotor du moteur.

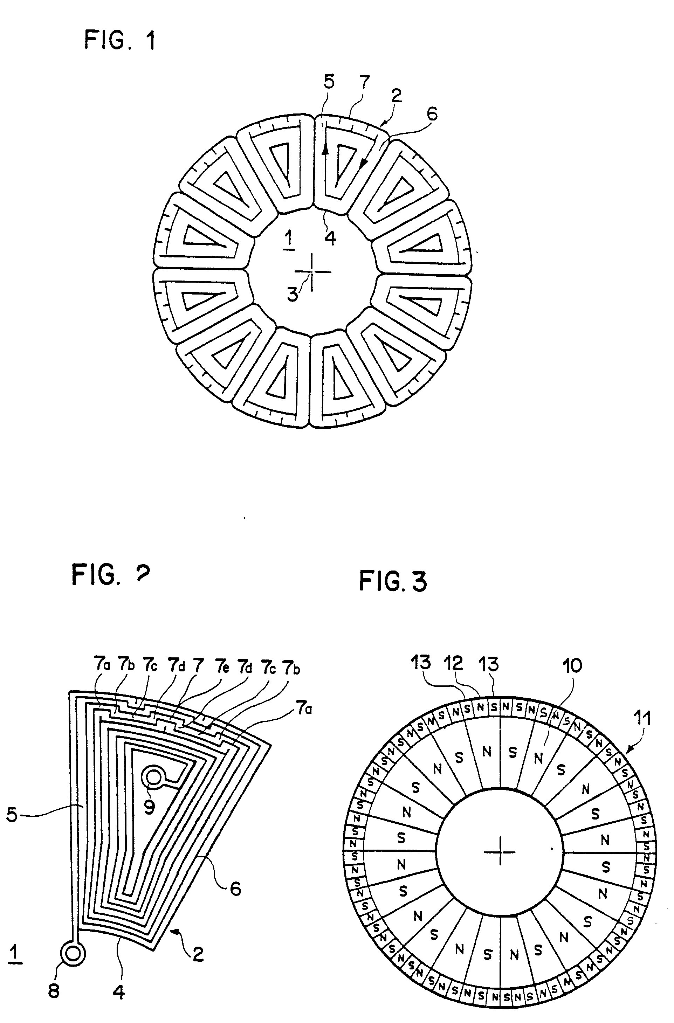

Le moteur à courant continu représenté partiellement et schématiquement au dessin comporte un stator formé d'au moins un disque 1, repésenté schématiquement à la figure 1, en matériau isolant supportant douze bobines 2 réparties autour du centre 3 du disque sur une de ses faces. Comme on le voit à la fig. 1, chaque bobine 2 a une forme trapézoïdale avec une petite base 4, deux nappes de conducteurs actifs 5 et 6 qui s'étendent radialement vers la périphérie du disque et une grande base 7 sur la constitution de laquelle on reviendra plus loin. Les détails de la réalisation d'une des bobines 2 sont représentés à la fig. 2. On voit que ces bobines sont formées par impression de pistes conductrices séparées les unes des autres sur la surface du disque 1, selon la technique des circuits imprimés. La bobine comprend donc les deux nappes 5 et 6 de conducteurs actifs qui s'étendent radialement, et couvrent un secteur de cercle dont l'ouverture est de 30°. Ces conducteurs actifs sont reliés par des connexions latérales le long de la petite base 4 et le long de la grande base 7, de façon à former des spires déposées en spirales les unes à côté des autres, les deux extrémités de la piste continue qui forme chaque bobine 2 étant reliées à des oeillets 8 et 9 imprimés sur le suppert 1. Un circuit électronique connu en soi qui peut être monté au revers du support 1 jouera le rôle du collecteur des moteurs à courant continu de construction classique. Ce circuit n'est pas représenté au dessin. Il comprendra deux entrées connectées aux deux bornes d'une source de courant entre lesquelles règne une tension continue constante.

Comme on le voit à la fig. 2, les connexions qui relient les extrémités extérieures des nappes 5 et 6 le long de la périphérie du stator 1 sont constituées par des bandes imprimées semblables à celles qui forment les conducteurs actifs, mais les connexions qui correspondent aux spires successives n'ont pas toutes la même allure. Les connexions qui relient les conducteurs actifs les plus rapprochés, c'est-à-dire celles qui sont le plus voisines de l'oeillet 9 s'étendent en arc de cercle centré sur l'axe 3. En revanche, pour les connexions des spires extérieures on a choisi une disposition en zig-zag comportant à partir de l'extrémité extérieure des conducteurs actifs appartenant à l'une où l'autre des nappes 5 et 6, un premier segment périphérique en arc de cercle 7a suivi d'un segment de conducteur disposé radialement et désigné par 7b qui s'étend en direction de l'axe 3, puis, après un court chemin de retour un nouveau segment périphérique en arc de cercle centré sur l'axe 3 désigné par 7c, un nouveau segment radial dirigé cette fois vers l'extérieur et désigné par 7d et un second segment périphérique externe 7e qui est symétrique par rapport à l'axe central de la bobine, le segment suivant reproduisant de façon symétrique l'allure des segments radiaux 7d et 7b, ainsi que des segents périphériques externes et internes 7a et 7c. Comme on le voit au dessin, chaque conducteur entoure celui qui es disposé en position adjacente vers l'intérieur et l'ensemble forme une nappe de connexions ayant une allure ondulée ressemblant aux motifs décoratifs appelés "grecque". Ainsi la nappe des connexions externes de la bobine 2 comporte si l'on tient compte des extrémités extérieures des conducteurs actifs 5 et 6, trois paires de nappes segmentaires de conducteurs radiaux qui sont joints en série avec les conducteurs actifs 5 et 6 et qui s'étendent radialement sur une fraction de la longueur totale des conducteurs 5 et 6.

On forme un stator par exemple à l'aide de deux disques 1 décalés de 90° électriques. Le stator ainsi décrit coopérera avec un rotor qui est représenté schématiquement à la fig. 3 et qui est constitué d'un ensemble d'aimants permanents ayant également des formes en secteur de cercle d'une ouverture égale à celle occupée par une nappe de conducteurs actifs. Le rotor représenté à la fig. 3 peut être formé d'un disque mince de matériau ferro-magnétique à forte rémanence aimanté dans le sens axial, de sorte qu'à chaque pôle nord ou sud visible à la fig. 3, correspond un pôle sud ou nord présent sur la face opposée du disque. Ce rotor sera monté sur un arbre (non représenté) supporté par des paliers fixes de façon à être coaxial au disque 1. Le nombre de paires de pôles formées par les aimants successifs 10 de l'assemblage 11, correspond au nombre des bobines 2, c'est-à-dire qu'il est de douze. Tel qu'il a été décrit jusqu'à maintenant, le rotor illustré à la fig. 3 pourrait fonctionner en collaboration avec le stator des fig. 1 et 2. Cependant, la fig. 3 représente une variante d'exécution du rotor dans laquelle les parties périphériques des différents aimants 10 ont subi une opération d'aimantation telle que chacune de ces parties périphériques est divisée en trois zones, dont la zone centrale 12 a une aimantation allant dans le même sens que l'aimantation principale de l'aimant, tandis que les deux zones extrêmes 13 sont aimantées dans le sens contraire.

Les effets de la disposition décrite sont les suivants: comme le stator comporte douze bobines, le dispositif d'alimentation constitué par le circuit électronique relié aux pôles de la source de courant continu devra provoquer 24 commutations des extrémités des bobines par tour du rotor c'est-à-dire 2 commutations par paire de pôles pour chacun des deux disques 1 décalés de 90° électriques, de sorte que l'ondulation du couple serait, dans une disposition normale des bobines, égale à $1 - \cos \frac{\pi}{4}$.

Toutefois, les segments de conducteurs auxiliaires 7b, 7d et les extrémités des conducteurs 5 et 6 forment trois paires de nappes de conducteurs auxiliaires qui lors de la rotation du rotor portant les aimants permanents 10, 12 et 13, sont le siège d'une tension induite dont la fréquence est égale au triple de la fréquence des commutations. Il en résulte que la variation du couple moteur en fonction de l'angle de rotation du rotor aura une allure beaucoup plus aplatie que cela n'aurait été le cas en l'absence des ondulations formées à la partie périphérique des bobines.

En ce qui concerne la subdivision des pôles magnétiques permanents des aimants 10 à leur périphérie, on a constaté que si cette disposition renforce l'effet obtenu par les ondulations des parties périphériques des bobines, elle n'est pas absolument indispensable et l'effet d'aplatissement existerait également en l'absence de ces subdivisions, c'est-à-dire si les paires d'aimants qui forment le rotor avaient une aimantation permanente fixe depuis leur extrémité intérieure jusqu'à leur extrémité extérieure.

Il va sans dire que dans la disposition représentée au dessin, au lieu de bobines 2 formées par des conducteurs imprimées sur un substrat isolant, on pourrait également utiliser des bobines sans noyau formées par un petit nombre de couches de spires de fil fin, ces spires étant amalgamées les unes aux autres selon une technique bien connue et collées par exemple sur un support tel que le substrat 1.

Toutefois, dans le cas où on utilise du fil pour constituer les bobines sans noyau désignées par 2, on a constaté qu'il est plus simple au point de vue fabrication de réaliser les nappes de conducteurs auxiliaires destinées à aplatir la courbe de couple, en procédant de la façon suivante: les spires, de forme trapézoïdale, constituant les bobines 2 sont tout d'abord bobinées selon le tracé de la fig. 1 mais avec des connexions périphériques externes en arc de cercle, donc sans ondulations, de façon à constituer la partie principale de la bobine avec les nappes de conducteurs actifs radiaux 5 et 6. Après avoir ainsi bobiné, par exemple trois couches de spires jointives, on forme une dernière couche de spires superposée aux trois premières, mais en disposant dans chaque spire les segments de conducteurs auxiliaires de façon à ce qu'ils s'étendent radialement et forment trois paires de nappes auxiliaires disposées côte à côte et s'étendant d'une part sur toute la longueur radiale de la bobine et d'autre part en largeur sur toute celle de la bobine. On obtiendrait ainsi une multiplication par trois de la fréquence de la tension induite dans les nappes de conducteurs auxiliaires au moment de la rotation du moteur, sans qu'il soit nécessaire de subdiviser le flux des aimants en inversant les parties périphériques extrêmes des flux.

Bien entendu, au lieu de trois paires de nappes de conducteurs auxiliaires, on pourrait aussi en prévoir cinq ou sept, ou n'importe quel nombre impair. Cependant, on a constaté qu'avec trois paires de nappes de conducteurs auxiliaires ce qui représente la simplification maximum pour l'établissement des bobines, on obtient déjà l'effet d'aplatissement des couples requis.

Bien entendu, la disposition décrite pourra également s'utiliser dans d'autres cas de construction de moteurs à courant continu. Ainsi premièrement, au lieu que le bobinage soit fixe et le support des champs magnétiques mobiles en rotation, la disposition inverse pourrait également être choisie en utilisant exactement la même disposition de bobines qu'aux fig. 1 et 2. Dans ce cas, les extrémités des bobines seraient connectées aux segments d'un collecteur contre lequel appuieraient les balais reliés aux pôles de la source de courant continu. Dans ce cas, la couronne des aimants permanents 10 constituerait le stator du moteur.

Le même agencement des nappes de conducteurs pourrait également être prévu dans le cas où les bobines seraient de forme rectangulaire et au lieu d'être des bobines plates, seraient des bobines cintrées selon des surfaces en segments de cylindre, centrées sur l'axe du moteur. Dans ce cas, les flux magnétiques créés par les aimants seraient disposés radialement les aimants étant disposés soit à l'intérieur des bobines, soit à l'extérieur autour de celles-ci. Dans les deux cas, on peut avoir la disposition selon laquelle le support des flux magnétiques permanents constitue le rotor, le support du bobinage étant le stator, ou l'inverse, c'est-à-dire que le support des flux magnétiques constitue le stator et le support du bobinage le rotor.

Finalement, dans le cas où les bobines sont des enroulements minces incurvés en forme de segment de surface cylindrique, on peut aussi prévoir que le tracé des conducteurs actifs ne soit plus une génératrice du cylindre, c'est-à-dire une ligne droite, mais que la forme des bobines soit incurvée en hélice, la source des champs magnétiques étant également agencée de façon que les flux magnétiques aient également une allure hélicoïdale.

## Revendications

1. Moteur électrique comprenant une partie fixe, une partie mobile en rotation autour d'un axe (3), et un dispositif d'alimentation qui est normalement relié à une source de puissance à tension constante, moteur dans lequel une desdites parties comporte une bobinage (2) avec un ensemble de nappes actives (5, 6) formées de conducteurs actifs, réparties autour de l'axe (3) avec un pas donné, et un ensemble de nappes de connexion (2, 7) associées chacune à deux nappes actives adjacentes et dont les conducteurs relient en série les conducteurs actifs appartenant à ces deux nappes adjacentes, et dans lequel, en outre, le dispositif d'alimentation commande avec une fréquence qui correspond au pas des nappes actives (5, 6) des commutations des connexions entre les nappes et les pôles de la source de puissance, caractérisé en ce que dans une partie des nappes de connexion une partie des conducteurs sont disposés de façon à comporter des segments auxiliaires (7b̲, 7d̲) ayant une orientation semblable à celle des nappes actives (5, 6) qu'elles relient, et en ce que ces segments de conducteurs forment des nappes auxiliaires réparties avec un pas déterminé qui est un sousmultiple impair du pas des nappes actives.

2. Moteur électrique selon la revendication 1, dans lequel le bobinage (2) est constitué d'un ensemble de bobines minces comportant chacune deux nappes de conducteurs actifs (5, 6), ces bobines étant disposées côte à côte et réparties autour de l'axe (3), et la partie opposée au bobinage comportant des aimants (10, 12, 13) qui créent un ou plusieurs flux magnétiques permanents que les dits conducteurs actifs (5, 6) coupent, caractérisé en ce qu'au moins une partie des dites bobines (2) comporte un nombre impair de paires de nappes auxiliaires, ces nappes auxiliaires étant disposées côte à côte dans une surface comprise elle-même entre les deux conducteurs actifs (5, 6) de la bobine qui sont les plus éloignés l'un de l'autre.

3. Moteur électrique selon la revendication 2, caractérisé en ce que les bobines (2) sont constituées de pistes conductrices imprimées sur un substrat (1) et en ce que les nappes auxiliaires sont constituées par des ondulalations des segments de conducteur (7a, 7b, 7c, 7d, 7e,) joignant les extrémités des conducteurs actifs (5, 6).

4. Moteur électrique selon la revendication 3, caractérisé en ce que l'étendue des dites ondulations dans le sens de l'orientation des conducteurs actifs (5, 6) représente une fraction de la longueur totale des conducteurs actifs.

5. Moteur électrique selon la revendication 2, dans lequel les bobines (2) sont formées par des spires de fils comportant chacune un conducteur actif de chacune des deux nappes, caractérisé en ce que les nappes auxiliaires sont formées par des spires auxiliaires qui sont repliées sur elles-mêmes selon toute la longueur des conducteurs actifs (5, 6).

6. Moteur électrique selon la revendication 4, dans lequel chaque flux magnétique s'étend dans une région de l'espace qui en largeur couvre celle d'une nappe, caractérisé en ce que dans la région occupé les nappes auxiliaires, la disposition des aimants (10, 12, 13) est telle que chaque flux est divisé en flux partiel de direction salternées avant chacun une largeur qui correspond à une paire de nappes auxiliaires.

7. Moteur électrique selon la revendication 1, caractérisé en ce que la partie comportant le bobinage (2) est une partie fixe et en ce que le dispositif d'alimentation est constitué par un circuit électronique.

8. Moteur électrique selon la revendication 1, caractérisé en ce que la partie comportant le bobinage (2) est une partie mobile en rotation autour de l'axe (3) et en ce que le dispositif d'alimentation comporte un collecteur.


**Patentansprüche**

1. Elektrischer Motor mit einem stationären Teil, einem um eine Achse (3) drehbaren Teil und einer Versorgungsvorrichtung, die normalerweise mit einer Leistungsquelle konstanter Spannung verbunden ist, in welchem Motor einer der genannten Teile eine Wicklung (2) umfasst, mit einem Satz von aktive Leiter bildenden aktiven Strängen (5, 6), die in einer gegebenen Teilung um die Achse (3) verteilt angeordnet sind, und einem Satz von Verbindungsträgern (2, 7), von denen jeder zwei benachbarten aktiven Strängen zugeordnet ist und deren Leiter die diesen beiden benachbarten Strängen zugehörigen aktiven Leiter in Reihe verbinden und wobei weiter die Versorgungsvorrichtung die Kommutierung der Verbindungen zwischen den Strängen und den Polen der Leistungsquelle mit einer der Teilung der aktiven Stränge entsprechenden Frequenz steuert, dadurch gekennzeichnet, dass in einem Teil der Verbindungsstränge ein Teil der Leiter so angeordnet ist, dass sie Hilfssegmente (7b, 7d) bilden, die eine ähnliche Orientierung aufweisen wie jene der mit ihnen verbundenen aktiven Schichten (5, 6), und dass diese Leitersegmente Hilfsstränge bilden, die gemäss einer Teilung verteilt angeordnet sind, welche ein ungerader Bruchteil der Teilung der aktiven Stränge ist.

2. Motor nach Anspruch 1, in welchem die Wicklung durch einen Satz von dünnen Spulen (2) gebildet ist, von denen jede zwei aktive Leiterstränge (5, 6) aufweist, diese Seite an Seite und um die Achse (3) verteilt angeordnet sind, und der der Wicklung gegenüberliegende Teil Magnete (10, 12, 13) umfasst, die einen oder mehrere permanente Magnetflüsse erzeugen, die zum Schneiden durch die genannten aktiven Leiter bestimmt sind, dadurch gekennzeichnet, dass wenigstens ein Teil der genannten Spulen (2) eine ungerade Anzahl von Hilfsstrangpaaren aufweist, und dass diese Hilfsstränge Seite an Seite in einem Flächenbereich zwischen den beiden längsten aktiven Leitern (5, 6) der Spule angeordnet sind.

3. Motor nach Anspruch 2, dadurch gekennzeichnet, dass die Spulen (2) durch auf einem Substrat (1) befindliche Leiterbahnen und die Hilfsstränge durch wellenförmige, die Enden der aktiven Leiter (5, 6) verbindende Leitersegmente (7a, 7b, 7c, 7d, 7e) gebildet sind.

4. Motor nach Anspruch 3, dadurch gekennzeichnet, dass die Grösse der Wellenform der genannten Leitersegmente in der Richtung der aktiven Leiter (5, 6) einem Bruchteil der ganzen Länge der aktiven Leiter entspricht.

5. Motor nach Anspruch 2, in welchem die Spulen (2) durch Drahtwindungen gebildet sind, von denen jede einen aktiven Leiter von jedem der beiden Stränge umfasst, dadurch gekennzeichnet, dass die Hilfsstränge durch Hilfswindungen gebildet sind, die über die ganze Länge der aktiven Leiter in sich selbst gefaltet sind.

6. Motor nach Anspruch 4, in welchem jeder magnetische Fluss sich über einen Bereich erstreckt, dessen Breite jene eines Stranges bedeckt, dadurch gekennzeichnet, dass die Magnete (10, 12, 13) in dem durch die Hilfsstränge besetzten Bereich so angeordnet sind, dass jeder Fluss in richtungswechselnde Teilflüsse unterteilt ist, von denen jeder eine Breite aufweist, die derjenigen in einem Paar der Hilfsstränge entspricht.

7. Motor nach Anspruch 1, dadurch gekennzeichnet, dass der die Wicklung (2) aufweisende Teil der stationäre Teil ist und dass die Versorgungsvorrichtung durch einen elektronischen Stromkreis gebildet ist.

8. Motor nach Anspruch 1, dadurch gekennzeichnet, dass der die Wicklung (2) aufweisende Teil ein um die Achse (3) drehbarer Teil ist und dass die Versorgungsvorrichtung einen Kollektor umfasst.

## Claims

1. Electric motor including a fixed portion, a portion rotatable about an axis (3), and a feed device which is normally connected to a power source of constant voltage, in which motor one of said portions comprises a winding (2) having an assembly of active laps (5, 6) formed of active conductors, distributed about the axis (3) at a given pitch, and an assembly of connection laps (2, 7) each associated with two adjacent active laps, and the conductors of which connect in series the active conductors belonging to these two adjacent laps, and further in which the feed device controls, at a frequency which corresponds to the pitch of the active laps (5, 6), commutations of connections between the laps and the poles of the power source, characterized in that in some of the connection laps, some of the conductors are disposed so as to comprise auxiliary segments (7b, 7d) having an orientation similar to that of the active laps (5, 6) which they connect, and in that these segments of conductors form auxiliary laps distributed at a specific pitch which is an odd-number submultiple of the pitch of the active laps.

2. Electric motor according to claim 1, in which the winding (2) is composed of an assembly of thin coils, each comprising two laps of active conductors (5, 6), these coils being disposed side by side and distributed about the axis (3), and the portion opposite the winding comprising magnets (10, 12, 13) which create one or more permanent magnetic fluxes which are intersected by the said active conductors (5, 6), characterized in that at least some of the said coils (2) comprise an odd number of pairs of auxiliary laps, these auxiliary laps being disposed side by side in a surface which is in turn included between the two active conductors (5, 6) of the coil (2) which are the farthest away from one another.

3. Electric motor according to claim 2, characterized in that the coils (2) are composed of conductive paths printed on a substrate (1), and in that the auxiliary laps are composed of undulations of the conductor segments (7a, 7b, 7c, 7d, 7e) joining the ends of the active conductors (5, 6).

4. Electric motor according to claim 3, characterized in that the extent of the said undulations in the direction of the orientation of the active conductors (5, 6) represents a fraction of the total length of the active conductors.

5. Electric motor according to claim 2, in which the coils (2) are formed by turns of wires each comprising an active conductor of each of the two laps, characterized in that the auxiliary laps are formed by auxiliary turns which are folded back upon themselves along the whole length of the active conductors (5, 6).

6. Electric motor according to claim 4, in which each magnetic flux extends in a region of space which covers that of a lap in width, characterized in that in the region occupied by the auxiliary laps, the arrangement of the magnets (10, 12, 13) is such that each flux is divided into partial fluxes of alternate directions, each having a width which corresponds to a pair of auxiliary laps.

7. Electric motor according to claim 1, characterized in that the portion comprising the winding (2) is a fixed portion, and in that the feed device is constituted by an electronic circuit.

8. Electric motor according to claim 1, characterized in that the portion comprising the winding (2) is a portion rotatable about the axis (3), and in that the feed device comprises a collector.

FIG. 1

FIG. 2

FIG. 3